# EUROPEAN PATENT SPECIFICATION

(11) **EP 3 962 044 B1**
(45) Date of publication and mention of the grant of the patent: **24.06.2026**
(21) Application number: 20794603.9
(22) Date of filing: 30.03.2020
(51) Int. Cl.: H04M 1/02, H04M 1/03, H04R 1/30, H04R 1/36

(54) **MOBILE TERMINAL**
MOBILES ENDGERÄT
TERMINAL MOBILE

(30) Priority: 24.04.2019 CN 201910334752
(43) Date of publication of application: 02.03.2022
(73) Proprietor: VIVO MOBILE COMMUNICATION CO., LTD., Dongguan, Guangdong 523860 (CN)
(72) Inventor: MAI, Biquan, Dongguan, Guangdong 523860 (CN); CHEN, Junhui, Dongguan, Guangdong 523860 (CN)
(74) Representative: Lavoix
(86) International application number: PCT/CN2020/082083
(87) International publication number: WO 2020/216003

(56) References cited:
- EP-A1- 1 547 349
- EP-B1- 1 547 349
- CN-A- 1 692 620
- CN-A- 101 151 875
- CN-A- 104 580 612
- CN-A- 108 574 919
- CN-A- 110 166 587
- CN-U- 203 618 051
- JP-A- 2001 230 841
- US-A1- 2013 040 701

## Description

### TECHNICAL FIELD

The present disclosure relates to the field of communications technologies, and in particular, to a mobile terminal.

### BACKGROUND

A receiver of a mobile terminal is disposed inside the mobile terminal, and specifically at a position of the mobile terminal close to the top. As the receiver of the mobile terminal is not arranged in the middle of the mobile terminal, the receiver is leftward or rightward from the middle (that is, the receiver is closer to a left side of the mobile terminal, or the receiver is closer to a right side of the mobile terminal). As such, because a narrow slit for sounds to reach out is located in the top middle of a display screen of the mobile terminal, a sound outlet channel that communicates between the receiver and the narrow slit on the display screen is also leftward or rightward from the middle.

The receiver being arranged leftward from the middle is used as an example. When a user uses a mobile terminal with a receiver arranged leftward to receive a speech, if the user listens with the left ear, a part of the left ear in contact with the mobile terminal may block a first part of the narrow slit (the first part is a part of the narrow slit close to the sound outlet channel), such that a sound made by the receiver may be transmitted out only through a second part of the narrow slit (the second part is a part of the narrow slit far from the sound outlet channel).

Because a distance between the receiver and the second part of the narrow slit is relatively farther, a sound transmitted out through the second part of the narrow slit is low in volume and poor in tone quality, which will affect a speech receiving quality of the mobile terminal.

CN 108574919A discloses a mobile terminal. EP 1547349A1 discloses an apparatus and a method for controlling the source of sound emitted from a mobile terminal.

### SUMMARY

Embodiments of the present disclosure provide a mobile terminal, as defined in the appended set of claims, so as to resolve the problem of low volume and low tone quality in the related technologies when a mobile terminal receives a speech because a narrow slit of the mobile terminal is blocked.

In the embodiments of the present disclosure, the mobile terminal includes: a receiver, disposed on one side of a center line of the mobile terminal, where a sound outlet hole is provided in a display screen of the mobile terminal, a front cavity sound outlet channel of the receiver is provided inside the mobile terminal, and the front cavity sound outlet channel communicates with the sound outlet hole; and a through-hole is provided at the top of the mobile terminal, and the through-hole communicates with the front cavity sound outlet channel. In this way, a sound transmitted out through the front cavity sound outlet channel may be transmitted out through the sound outlet hole, and may also be transmitted out through the through-hole. This can increase the volume of a sound transmitted out of the mobile terminal during speech receiving, and improve a speech receiving quality of the mobile terminal.

### BRIEF DESCRIPTION OF DRAWINGS

FIG. 1 is a first structural diagram of a mobile terminal according to an embodiment of the present disclosure;
FIG. 2 is a second structural diagram of a mobile terminal according to an embodiment of the present disclosure;
FIG. 3 is a third structural diagram of a mobile terminal according to an embodiment of the present disclosure;
FIG. 4a is a first graph contrasting curves of distortion according to an embodiment of the present disclosure;
FIG. 4b is a second graph contrasting curves of distortion according to an embodiment of the present disclosure;
FIG. 5 is a fourth structural diagram of a mobile terminal according to an embodiment of the present disclosure;
FIG. 6 is a fifth structural diagram of a mobile terminal according to an embodiment of the present disclosure; and
FIG. 7 is a sixth structural diagram of a mobile terminal according to an embodiment of the present disclosure.

### DESCRIPTION OF EMBODIMENTS

The following clearly and completely describes the technical solutions in the embodiments of the present disclosure with reference to the accompanying drawings in the embodiments of the present disclosure. Apparently, scope of the invention is defined by the scope of the appended claims.

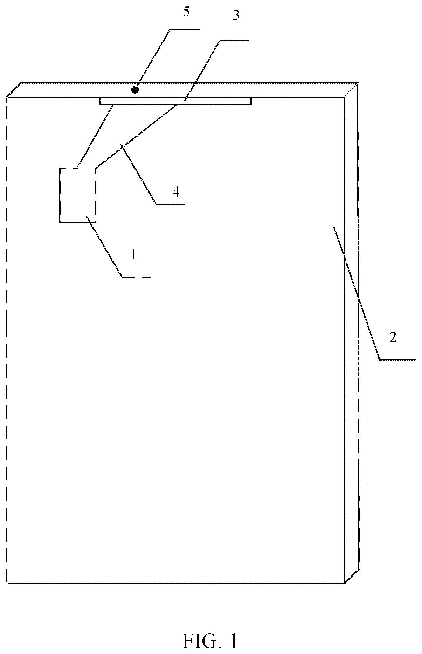

Referring to FIG. 1, FIG. 1 is a first structural diagram of a mobile terminal according to an embodiment of the present disclosure. As shown in FIG. 1, this embodiment provides the mobile terminal. The mobile terminal includes:
a receiver 1, disposed on one side of a center line of the mobile terminal, where a sound outlet hole 3 is provided in a display screen 2 of the mobile terminal, a front cavity sound outlet channel 4 of the receiver 1 is provided inside the mobile terminal, and the front cavity sound outlet channel 4 communicates with the sound outlet hole 3; and a through-hole 5 is provided at the top of the mobile terminal, and the through-hole 5 communicates with the front cavity sound outlet channel 4.

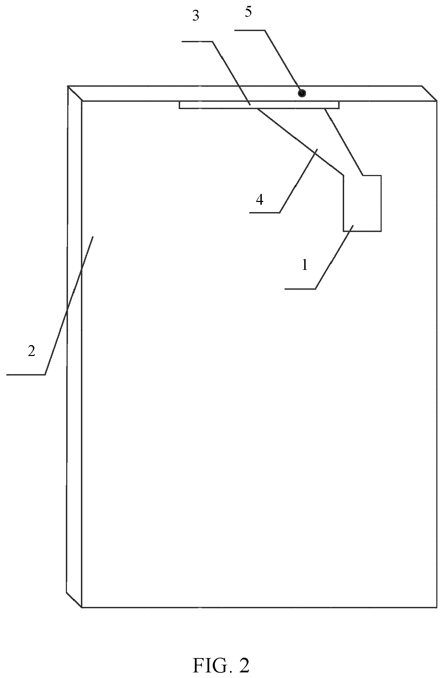

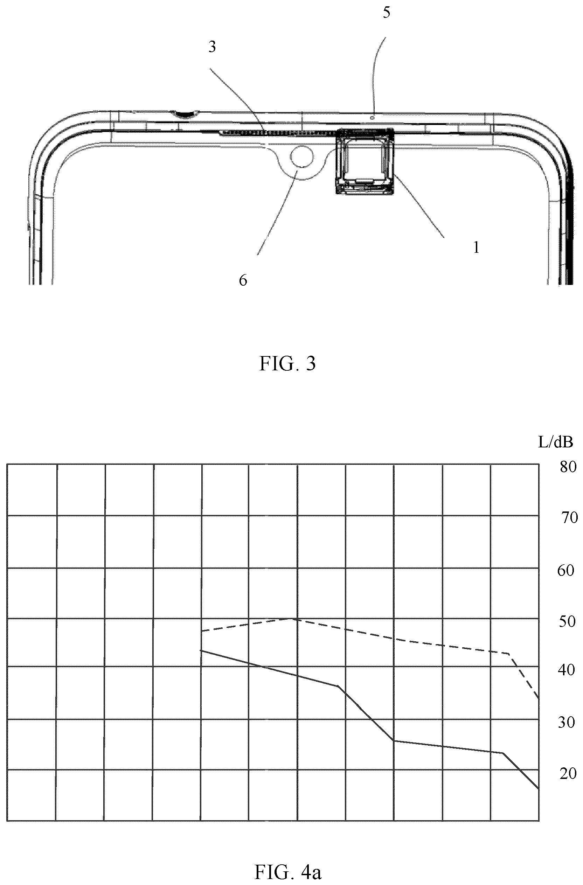

Specifically, the sound outlet hole 3 may be a narrow slit or a tiny slit. The display screen 2 of the mobile terminal is a plane on which a display screen is located. The receiver 1 is disposed at a position in the mobile terminal close to the top. The center line of the mobile terminal may be construed as a center line of the display screen 2. As shown in FIG. 1, the center line of the display screen is a center line in a longitudinal direction of the display screen. As shown in FIG. 1 and FIG. 2, FIG. 1 shows a receiver 1 that is disposed leftward from the middle, and FIG. 2 shows a receiver 1 that is disposed rightward from the middle. That the receiver 1 is disposed on one side of the center line of the mobile terminal may be considered that the receiver 1 is biased. When the receiver 1 is biased, a front camera of the mobile terminal may be disposed in the middle of the display screen 2. As shown in FIG. 3, the reference numeral 6 in the figure represents the front camera.

The top of the mobile terminal is construed as a top face of the mobile terminal, and the top face is adjacent to the display screen 2. The through-hole 5 is provided at the top of the mobile terminal, the through-hole 5 communicates with the front cavity sound outlet channel 4, and a sound transmitted out through the front cavity sound outlet channel 4 may be transmitted out through the sound outlet hole 3, and may also be transmitted out through the through-hole 5. This can increase the volume of a sound transmitted out of the mobile terminal during speech receiving, and improve speech receiving quality of the mobile terminal.

When a receiver under test is biased, contrast results of sound loudness and distortion of the mobile terminal with and without a through-hole at the top are shown in Table 1.

**Table 1**

| | Receive loudness rating (RLR) | Distortion (1020 Hz) | Distortion (low frequency) |
|---|---|---|---|
| With through-hole | 1.91 | 18.22 | 18.62 |
| Without through-hole | -0.17 | 31.98 | 33.67 |

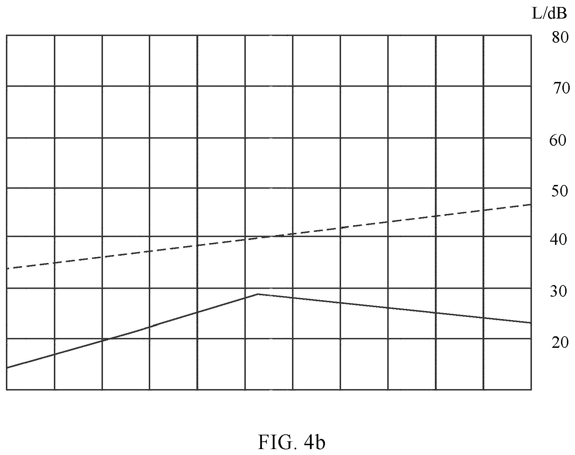

From Table 1, it can be learned that, in a case that a sound outlet hole is blocked, when a through-hole is provided, loudness is improved by 2 db, and distortion is mitigated a lot. In addition, FIG. 4a shows a graph contrasting curves of of distortion at 1020 Hz. A dotted line in FIG. 4a shows a curve of distortion for a mobile terminal provided with a through-hole in the case that a sound outlet hole is partly blocked by an earlobe. A solid line in FIG. 4a shows a curve of distortion for a mobile terminal not provided with a through-hole in the case that a sound outlet hole is partly blocked by an earlobe. FIG. 4b shows a graph contrasting curves of distortion at a low frequency. A dotted line in FIG. 4b shows a curve of distortion for a mobile terminal provided with a through-hole in the case that a sound outlet hole is partly blocked. A solid line in FIG. 4b shows a curve of distortion for a mobile terminal not provided with a through-hole in the case that a sound outlet hole is partly blocked by an earlobe. From FIG. 4a and FIG. 4b, it can be learned that, when the mobile terminal is provided with a through-hole, distortion of sound is mitigated a lot.

Optionally, the receiver 1 and the through-hole 5 are provided on a same side of the center line. That is, in a case that the receiver 1 is located on a first side of the center line, the through-hole 5 is also located on the first side of the center line. The first side may be a left side or a right side. The mobile terminal includes a left frame and a right frame. The display screen is disposed between the left frame and the right frame. That the receiver 1 is located on the first side of the center line may be construed as that the receiver 1 is close to the left frame, or the receiver 1 is close to the right frame. When the receiver 1 is close to the left frame, the through-hole 5 is also close to the left frame. When the receiver 1 is close to the right frame, the through-hole 5 is also close to the right frame.

When the receiver 1 and the through-hole 5 are provided on the same side of the center line (the left side or the right side of the center line), a sound made by the receiver 1 is transmitted out through the through-hole 5 for a relatively short distance. This can reduce an adverse effect of a transmission distance on the volume and tone quality and resolve the problem of low volume and poor tone quality caused by a far transmission distance. The size and position of the through-hole may be provided as appropriate to an actual situation. However, the through-hole needs to be provided near the receiver, so as to avoid decline of sound performance due to increase of a sound transmitting length.

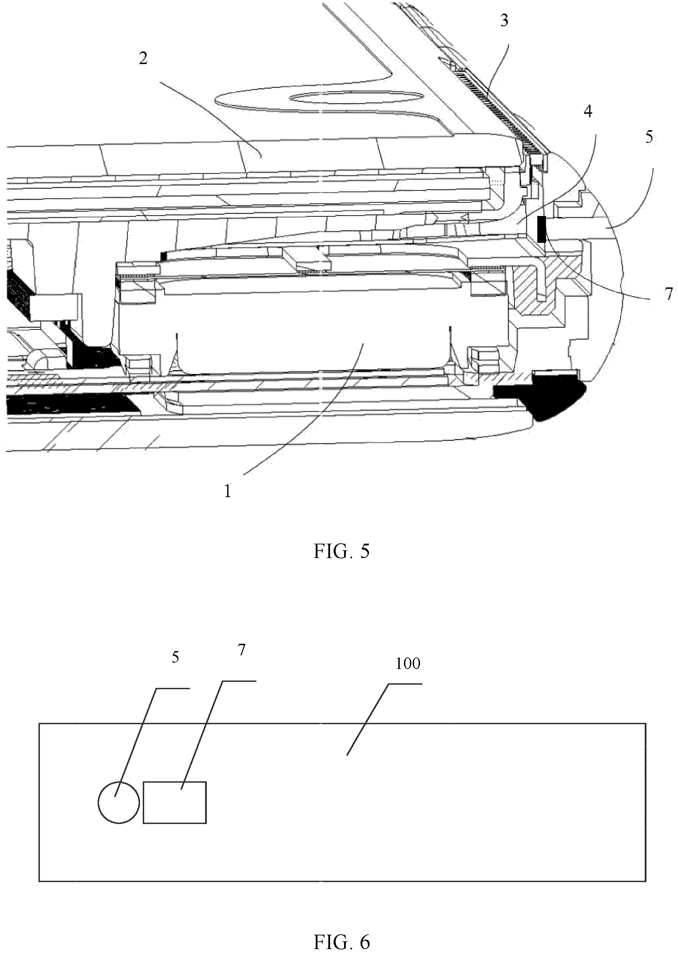

As shown in FIG. 5, a slide groove is provided inside the mobile terminal, the slide groove communicates with the through-hole 5, a slider 7 capable of sliding is disposed in the slide groove, and the slider 7 slides between a first position and a second position of the slide groove; and in a case that the slider 7 is located in the first position, the slider 7 closes the through-hole 5, and in a case that the slider 7 is located in the second position, the slider 7 opens the through-hole 5.

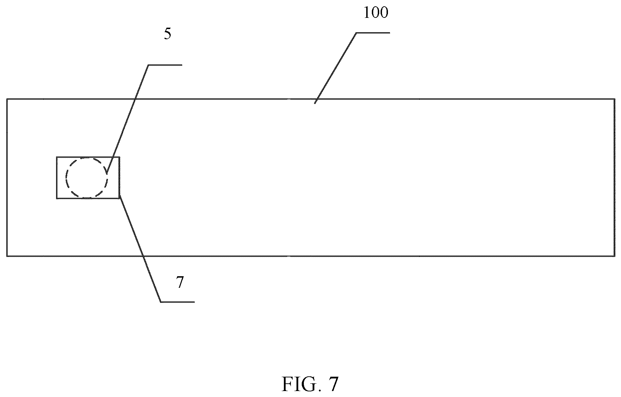

Specifically, when the slider 7 is in the first position, the slider 7 closes the through-hole 5. In this case, the through-hole 5 does not communicate with the front cavity sound outlet channel 4, and a sound made by the receiver 1 cannot be transmitted out through the through-hole 5. When the slider 7 is in the second position, the slider 7 opens the through-hole 5. In this case, the through-hole 5 communicates with the front cavity sound outlet channel 4, and a sound made by the receiver 1 can be transmitted out through the through-hole 5. FIG. 6 and FIG. 7 show sectional views of a mobile terminal. The reference numeral 100 in the figures represents a screen of the mobile terminal. FIG. 6 shows a positional relationship between the slider 7 and the through-hole 5 when the slider 7 is in the second position. FIG. 7 shows a positional relationship between the slider 7 and the through-hole 5 when the slider 7 is in the first position. The slider 7 may match the through-hole 5 in shape. For example, if a cross section of the through-hole 5 is circular, the slider 7 may also be circular; and if the cross section of the through-hole 5 is rectangular, the slider 7 may also be rectangular. In size, the slider 7 is slightly larger than the cross section of the through-hole 5. In this way, when the slider 7 is in the first position, it can effectively ensured that the slider 7 can block the through-hole 5.

When the slider 7 is in the first position, the slider 7 closes the through-hole 5, and a sound made by the receiver 1 cannot be transmitted out through the through-hole 5. This may prevent sound leakage and protect user privacy. When the slider 7 is in the second position, the slider 7 opens the through-hole 5, and a sound made by the receiver 1 is transmitted out through the through-hole 5. This can increase the volume of a sound transmitted out of the mobile terminal during speech receiving, and improve a speech receiving quality of the mobile terminal. Certainly, the slider 7 may alternatively be designed to close the through-hole 5 in the first position and fully open the through-hole 5 (that is, not block the through-hole 5 at all) in the second position, and the slider 7, at a position between the first position and the second position, partially blocks the through-hole 5. In addition, an air filter is provided in the through-hole 5, so as to prevent dust from falling into the through-hole 5 to block the through-hole 5 and affect sound transmission.

The receiver 1 and the slide groove are provided on a same side of the center line. The receiver 1 and the through-hole 5 are provided on the same side of the center line. This may reduce a length of the slide groove communicating with the through-hole, reducing costs of manufacturing the slide groove and reducing a space occupied by the slide groove.

That the slider 7 slides in the slide groove may include two implementations. In a first implementation, the slider 7 in the slide groove is capable of freely sliding under gravitational force. In a second implementation, a drive mechanism is disposed inside the mobile terminal, where the drive mechanism is connected to the slider 7, and the drive mechanism is configured to drive the slider 7 to slide between the first position and the second position.

In the first implementation, the slider 7 in the slide groove freely slides under gravitational force. In this way, the slider 7 freely slides under gravitational force, to close the through-hole 5, so as to prevent sound leakage and protect user privacy; or to open the through-hole 5, so as to increase the volume of a sound transmitted out of the mobile terminal during speech receiving, and improve a speech receiving quality of the mobile terminal.

To avoid that the slider 7 slides under gravitational force along with an angle change of the mobile terminal when no speech is being received, a limiting member for fixing the slider 7 may be disposed in the first position or the second position of the slide groove, so as to prevent the slider 7 from sliding in the slide groove when no speech is being received. When the mobile terminal is receiving a speech, the limiting member relieves the fixture on the slider 7, and the slider 7 is capable of freely sliding in the slide groove under gravitational force, to close the through-hole 5 or open the through-hole 5.

In the second implementation, a drive mechanism is disposed inside the mobile terminal, where the drive mechanism is connected to the slider 7, and the drive mechanism is configured to drive the slider 7 to slide between the first position and the second position. The drive mechanism may be connected to a control chip of the mobile terminal. The control chip controls, based on an input operation of a user, the drive mechanism to drive the slider 7 to slide. In this case, the user may set a position of the slider 7 based on an actual demand, to selectively open the through-hole 5 or close the through-hole 5.

The receiver 1 being disposed leftward from the middle is used as an example. The receiver 1 is disposed leftward. The slide groove is provided on the left side of the through-hole 5. When a user is receiving a speech with the left ear, the left top of the mobile terminal is located below the right top of the mobile terminal, the slider 7 slides to the second position under gravitational force, or the slider 7 is driven by the drive mechanism to slide to the second position. In this case, the through-hole 5 communicates with the front cavity sound outlet channel 4, and a sound made by the receiver 1 may be transmitted out through the through-hole 5. Because the receiver 1 is disposed leftward, when the user is receiving a speech with the left ear, a first part of the sound outlet hole 3 (the first part is a part of the sound outlet hole 3 close to the front cavity sound outlet channel 4) is blocked, and a sound is transmitted out only through a second part of the sound outlet hole 3 (the second part is a part of the sound outlet hole 3 far from the front cavity sound outlet channel 4), which is low in volume and poor in tone quality. However, based on the implementations of this embodiment, a sound made by the receiver 1 may be transmitted out through the through-hole 5. This can increase the volume of a sound transmitted out of the mobile terminal during speech receiving, and improve a speech receiving quality of the mobile terminal, thereby resolving the problem of low volume and poor tone quality of the mobile terminal.

The receiver 1 is disposed leftward. The slide groove is provided on the left side of the through-hole 5. When the user is receiving a speech with the right ear, the right top of the mobile terminal is located below the left top of the mobile terminal, the slider 7 slides to the first position under gravitational force, or the slider 7 is driven by the drive mechanism to slide to the first position. In this case, the through-hole 5 does not communicate with the front cavity sound outlet channel 4, and a sound made by the receiver 1 cannot be transmitted out through the through-hole 5. Because the receiver 1 is disposed leftward, when the user is receiving a speech with the right ear, a first part of the sound outlet hole 3 (the first part is a part of the sound outlet hole 3 close to the front cavity sound outlet channel 4) is not blocked, and a sound transmitted out through the sound outlet hole 3 is not affected. In this case, a sound transmitted out of the mobile terminal is normal, user experience is not affected, and there is no need to use the through-hole 5 to assist in transmitting a sound. In this case, the slider 7 closes the through-hole 5, and a sound made by the receiver 1 may not be transmitted out through the through-hole 5. This can effectively prevent sound leakage and protect user privacy.

The mobile terminal in the foregoing embodiment may be a mobile phone, a tablet computer (Tablet Personal Computer), a laptop computer (Laptop Computer), a personal digital assistant (personal digital assistant, PDA), a mobile internet device (Mobile Internet Device, MID), a wearable device (Wearable Device), or the like.

The foregoing descriptions are only specific implementations of the present disclosure, but are not intended to limit the protection scope of the present disclosure. Therefore, the protection scope of the present disclosure shall be subject to the protection scope of the claims.

## Claims

1. A mobile terminal, comprising:
a display screen (2);
a front camera of the mobile terminal, disposed in the middle of the upper edge of the display screen (2);
a left frame and a right frame with respect to a center line of the display screen (2) in a longitudinal direction of the display screen (2);
a receiver (1), disposed in the mobile terminal and at one side of the front camera which is closer to the left frame, or the right frame, than the front camera, wherein
a sound outlet hole (3) is disposed in an upper frame of the mobile terminal, a front cavity sound outlet channel (4) of the receiver (1) is provided inside the mobile terminal, and the front cavity sound outlet channel (4) extends to the sound outlet hole (3) to communicate with the sound outlet hole (3); and
a through-hole (5) is provided at a top side surface of the mobile terminal adjacent to the display screen (2), and the front cavity sound outlet channel (4) extends to the through-hole (5) to communicate with the through-hole (5);
the receiver (1) and the through-hole (5) are provided on a same side of the front camera;
a slide groove is provided inside the mobile terminal, the slide groove communicates with the through-hole (5), a slider (7) capable of sliding is disposed in the slide groove, and the slider (7) slides between a first position and a second position of the slide groove;
the slider (7) in the slide groove is capable of freely sliding under gravitational force;
or,
a drive mechanism is disposed inside the mobile terminal, wherein the drive mechanism is connected to the slider (7), and the drive mechanism is configured to drive the slider (7) to slide between the first position and the second position;
in a case that the slider (7) is located in the first position, the slider (7) is configured to close the through-hole (5), and in a case that the slider (7) is located in the second position, the slider (7) is configured to open the through-hole (5);
the sound outlet hole (3) has a first part and a second part, the first part is a part of the sound outlet hole (3) close to the front cavity sound outlet channel (4), the second part is a part of the sound outlet hole (3) far from the front cavity sound outlet channel (4), the first part and the receiver (1) are on the same side of the front camera, and the second part and the first part are disposed on opposite sides of the front camera;
in the second position, when the mobile terminal is used for speech receiving by an user with one ear, the first part of the sound outlet hole (3) is blocked by one ear, the through-hole (5) communicates with the front cavity sound outlet channel (4), and a sound made by the receiver (1) is transmitted out through the through-hole (5);
in the first position, when the mobile terminal is used for speech receiving by the user with another ear, the second part of the sound outlet hole (3) is blocked, and the first part of the sound outlet hole (3) is not blocked.

2. The mobile terminal according to claim 1, wherein the receiver (1) and the slide groove are provided on a same side of the center line.

3. The mobile terminal according to claim 1, wherein when the slider (7) in the slide groove is capable of freely sliding under gravitational force, a limiting member for fixing the slider (7) is disposed in the first position or the second position of the slide groove.

4. The mobile terminal according to any one of claims 1 to 3, wherein an air filter is disposed in the through-hole (5).

## Patentansprüche

1. Mobiles Endgerät, umfassend:
einen Anzeigebildschirm (2); eine Frontkamera des mobilen Endgeräts, die in der Mitte des oberen Rands des Anzeigebildschirms (2) angeordnet ist;
einen linken Rahmen und einen rechten Rahmen in Bezug auf eine Mittellinie des Anzeigebildschirms (2) in einer Längsrichtung des Anzeigebildschirms (2);
einen Empfänger (1), der in dem mobilen Endgerät an einer Seite der Frontkamera angeordnet ist und näher an dem linken oder rechten Rahmen ist als die Frontkamera, wobei
ein Tonaustrittsloch (3) in einem oberen Rahmen des mobilen Endgeräts angeordnet ist, ein vorderer Hohlraum-Tonaustrittskanal (4) des Empfängers (1) im Inneren des mobilen Endgeräts bereitgestellt ist, und sich der vordere Hohlraum-Tonaustrittskanal (4) bis zu dem Tonaustrittsloch (3) erstreckt, um mit dem Tonaustrittsloch (3) verbunden zu sein; und
wobei an einer oberen Seitenfläche des mobilen Endgeräts angrenzend an den Anzeigebildschirm (2) ein Durchgangsloch (5) bereitgestellt ist, und sich der vordere Hohlraum-Tonaustrittskanal (4) bis zu dem Durchgangsloch (5) erstreckt, um mit dem Durchgangsloch (5) verbunden zu sein;
der Empfänger (1) und das Durchgangsloch (5) auf derselben Seite der Frontkamera bereitgestellt sind;
eine Gleitnut im Inneren des mobilen Endgeräts bereitgestellt ist, die Gleitnut mit dem Durchgangsloch (5) in Verbindung ist, ein gleitfähiger Schieber (7) in der Gleitnut angeordnet ist und der Schieber (7) zwischen einer ersten Position und einer zweiten Position der Gleitnut gleitet;
der Schieber (7) in der Gleitnut in der Lage ist, durch Schwerkraft frei zu gleiten;
oder
ein Antriebsmechanismus im Inneren des mobilen Endgeräts angeordnet ist, wobei der Antriebsmechanismus mit dem Schieber (7) verbunden ist und konfiguriert ist, um den Schieber (7) zum Gleiten zwischen der ersten Position und der zweiten Position anzutreiben;
wobei in einem Fall, in dem der Schieber (7) in der ersten Position ist, der Schieber (7) konfiguriert, um das Durchgangsloch (5) zu schließen, und in einem Fall, in dem der Schieber (7) in der zweiten Position ist, der Schieber (7) konfiguriert ist, um das Durchgangsloch (5) zu öffnen;
das Tonaustrittsloch (3) einen ersten und einen zweiten Teil aufweist, wobei der erste Teil ein Teil des Tonaustrittslochs (3) ist, der nahe an dem vorderen Hohlraum-Tonaustrittskanal (4) ist, und der zweite Teil ein Teil des Tonaustrittslochs (3) ist, der weit von dem vorderen Hohlraum-Tonaustrittskanal (4) entfernt ist; der erste Teil und der Empfänger (1) auf derselben Seite der Frontkamera sind, während der zweite Teil und der erste Teil auf gegenüberliegenden Seiten der Frontkamera angeordnet sind;
wenn das mobile Endgerät in der zweiten Position für Sprachempfang durch einen Benutzer mit einem Ohr verwendet wird, der erste Teil des Tonaustrittslochs (3) durch ein Ohr blockiert ist, das Durchgangsloch (5) mit dem vorderen Hohlraum-Tonaustrittskanal (4) in Verbindung ist und ein durch den Empfänger (1) erzeugter Ton durch das Durchgangsloch (5) nach außen übertragen wird;
wenn das mobile Endgerät in der ersten Position für Sprachempfang von dem Benutzer mit dem anderen Ohr verwendet wird, der zweite Teil des Tonaustrittslochs (3) blockiert ist, der erste Teil Tonaustrittslochs (3) hingegen nicht blockiert ist.

2. Mobiles Endgerät nach Anspruch 1, wobei der Empfänger (1) und die Gleitnut auf derselben Seite der Mittellinie angeordnet sind.

3. Mobiles Endgerät nach Anspruch 1, wobei, wenn der Gleiter (7) in der Gleitnut in der Lage ist, unter Schwerkraft frei zu gleiten, ein Begrenzungselement zum Fixieren des Gleiters (7) in der ersten Position oder der zweiten Position der Gleitnut angeordnet ist.

4. Mobiles Endgerät nach einem der Ansprüche 1 bis 3, wobei in dem Durchgangsloch (5) ein Luftfilter angeordnet ist.

## Revendications

1. Terminal mobile, comprenant :
un écran d'affichage (2) ; une caméra frontale du terminal mobile, disposée au milieu du bord supérieur de l'écran d'affichage (2) ;
un cadre gauche et un cadre droit par rapport à une ligne centrale de l'écran d'affichage (2) dans une direction longitudinale de l'écran d'affichage (2) ;
un récepteur (1), disposé dans le terminal mobile et sur un côté de la caméra frontale qui est plus proche du cadre gauche ou du cadre droit que la caméra frontale, dans lequel
un trou de sortie du son (3) est disposé dans un cadre supérieur du terminal mobile, un canal de sortie du son de cavité avant (4) du récepteur (1) est prévu à l'intérieur du terminal mobile, et le canal de sortie du son de cavité avant (4) s'étend jusqu'au trou de sortie du son (3) pour communiquer avec le trou de sortie du son (3) ; et
un trou traversant (5) est prévu sur une surface latérale supérieure du terminal mobile, à côté de l'écran d'affichage (2), et le canal de sortie du son de cavité avant (4) s'étend jusqu'au trou traversant (5) pour communiquer avec le trou traversant (5) ;
le récepteur (1) et le trou traversant (5) sont situés d'un même côté de la caméra frontale ;
une rainure de coulissement est prévue à l'intérieur du terminal mobile, la rainure de coulissement communique avec le trou traversant (5), un coulisseau (7) capable de coulisser est disposé dans la rainure de coulissement, et le coulisseau (7) coulisse entre une première position et une seconde position de la rainure de coulissement ;
le coulisseau (7) dans la rainure de coulissement est capable de coulisser librement sous l'effet de la force gravitationnelle ;
ou,
un mécanisme d'entraînement est disposé à l'intérieur du terminal mobile, dans lequel le mécanisme d'entraînement est connecté au coulisseau (7), et le mécanisme d'entraînement est configuré pour entraîner le coulisseau (7) afin qu'il coulisse entre la première position et la seconde position ;
dans un cas où le coulisseau (7) se trouve dans la première position, le coulisseau (7) est configuré pour fermer le trou traversant (5) ; et dans un cas où le coulisseau (7) se trouve dans la seconde position, le coulisseau (7) est configuré pour ouvrir le trou traversant (5) ;
le trou de sortie du son (3) comprend une première partie et une seconde partie, la première partie est une partie du trou de sortie du son (3) proche du canal de sortie du son de cavité avant (4), la seconde partie est une partie du trou de sortie du son (3) éloignée du canal de sortie du son de cavité avant (4), la première partie et le récepteur (1) sont situés du même côté de la caméra frontale, et la seconde partie et la première partie sont disposées sur des côtés opposés de la caméra frontale ;
dans la seconde position, lorsque le terminal mobile est utilisé pour une réception vocale par un utilisateur par une oreille, la première partie du trou de sortie du son (3) est bloquée par une oreille, le trou traversant (5) communique avec le canal de sortie du son de cavité avant (4), et un son émis par le récepteur (1) est transmis à travers le trou traversant (5) ;
dans la première position, lorsque le terminal mobile est utilisé pour une réception vocale par l'utilisateur utilisant l'autre oreille, la seconde partie du trou de sortie du son (3) est bloquée, et la première partie du trou de sortie du son (3) n'est pas bloquée.

2. Terminal mobile selon la revendication 1, dans lequel le récepteur (1) et la rainure de coulissement sont situés d'un même côté de la ligne centrale.

3. Terminal mobile selon la revendication 1, dans lequel lorsque le coulisseau (7) dans la rainure de coulissement est capable de coulisser librement sous l'effet de la force gravitationnelle, un élément de limitation pour fixer le coulisseau (7) est disposé dans la première position ou la seconde position de la rainure de coulissement.

4. Terminal mobile selon l'une quelconque des revendications 1 à 3, dans lequel un filtre à air est disposé dans le trou traversant (5).
